# EUROPÄISCHE PATENTSCHRIFT

(11) **EP 3 754 441 B1**
(45) Veröffentlichungstag und Bekanntmachung des Hinweises auf die Patenterteilung: **31.05.2023**
(21) Anmeldenummer: 19181013.4
(22) Anmeldetag: 18.06.2019
(51) Int. Cl.: G05B 19/05, G06F 9/44, G05B 15/02, G06F 8/00, H04L 43/0817, H04Q 9/00, H04L 41/082, G08C 17/02

(54) **VERFAHREN ZUR BEREITSTELLUNG EINER MOBILEN APPLIKATION**
METHOD FOR PROVIDING A MOBILE APPLICATION
PROCÉDÉ DE FOURNITURE D'UNE APPLICATION MOBILE

(43) Veröffentlichungstag der Anmeldung: 23.12.2020
(73) Patentinhaber: Schneider Electric Industries SAS, 92500 Rueil Malmaison (FR)
(72) Erfinder: HIESER, Alexander, 97877 Wertheim (DE); ZINN, DR., Marcus, 63110 Rodgau (DE)
(74) Vertreter: Stoffregen, Hans-Herbert

(56) Entgegenhaltungen:
- EP-A1- 2 662 738
- WO-A1-2019/083909
- DE-A1-102005 037 280
- US-A1- 2019 065 217
- US-A1- 2019 095 196

## Beschreibung

Die Erfindung bezieht sich auf ein Verfahren zur Generierung und Bereitstellung einer mobilen Applikation nach dem Oberbegriff des Anspruchs 1.

Ein Verfahren zur Generierung und Bereitstellung einer mobilen Applikation ist aus der EP 2662738 A1 bekannt. Beschrieben wird ein Verfahren und eine Applikation zur Konfigurierung einer Komponente einer industriellen Automatisierungsanordnung, wobei durch die Konfigurierung der Komponente zumindest ein Parameter eingegeben oder verändert wird. Dabei wird zur Konfigurierung ein mobiles Gerät eingesetzt, wobei zuerst eine zur Konfigurierung eingerichtete Applikation von einer der Komponenten des Automatisierungsnetzwerkes zu dem mobilen Gerät übertragen wird, danach die Applikation auf dem mobilen Gerät zur Ausführung gebracht wird, weiter zwischen dem mobilen Gerät und der zu konfigurierenden Komponente eine logische Verbindung etabliert wird und schließlich mittels der logischen Verbindung der zumindest eine Parameter durch die Applikation des mobilen Geräts eingegeben oder verändert wird.

Die DE 10 2005 037 280 A1 betrifft ein Verfahren zur Kommunikation eines mobilen Geräts mit einem Arbeitsgerät, bei dem zwischen dem mobilen Gerät und dem Arbeitsgerät eine Kommunikationsverbindung aufgebaut wird. Eine Applikation wird von dem Arbeitsgerät auf das mobile Gerät geladen und die geladene Applikation wird auf dem mobilen Gerät ausgeführt. Daten des Arbeitsgerätes werden anhand der Applikation ausgelesen und/oder modifiziert.

Die US 2019/0065217 A1 betrifft ein System zur Generierung, Verteilung und Übertragung eines Inhalts einer progressiven Web-Applikation (PWA) auf einem Homescreen eines mobilen Geräts. Das System umfasst ein Interface, welches konfiguriert ist, ein oder mehrere PWAs zu generieren. Ferner umfasst das System einen Remote-Server, der konfiguriert ist, um die zumindest eine PWA zu hosten. Des Weiteren umfasst das System eine Browser basierte Konfigurations-Applikation, die auf dem mobilen Gerät implementiert ist, wobei das mobile Gerät einen Prozessor umfasst, der konfiguriert ist, die Schritte zur Bereitstellung eines Browser für einen Benutzer auszuführen, um auf ein oder mehrere PWAs zugreifen zu können, Instruktionen von dem Benutzter des mobilen Geräts empfangen zu können, die PWA auf dem Display des mobilen Geräts zu konfigurieren und um ein oder mehrere mit der PWA verbundene Parameter für ein Applikations-Programmierungsinterface (API) auf dem Display des mobilen Geräts konfigurieren zu können und den Inhalt der PWA an das mobile Gerät übertragen zu können.

Die US 2019/0095196 A1 betrifft ein Verfahren zum Update einer Web-Applikation. Das Verfahren umfasst den Empfang einer Applikations-Update-Anfrage für eine angefragte Web-Applikation von einer Service-Web-Applikation, die in einem Web-Browser auf dem mobilen Gerät ausgeführt wird.

Die WO 2019/083909 A1 betrifft ein System, Gerät und ein Verfahren zur Herstellung von Multimediatoren, wie z. B. verbessertes Gruppen-Tool-Management und vereinfachte Bereitstellung von benutzereigenen Geräteinhalten.

Nach dem Stand der Technik werden mobile Applikationen zur Konfiguration, Wartung und/oder Diagnose von Datenverarbeitungsgeräten in einem sogenannten App-Store bereitgestellt und können mit einem mobilen Gerät, wie Smartphone, aus dem App-Store geladen werden. Dies setzt allerdings voraus, dass der Benutzer des mobilen Gerätes in dem App-Store registriert ist und eine Berechtigung zum Download der mobilen Applikation hat.

Im Bereich der Industrieautomatisierung besteht oft das Bedürfnis, eine Vielzahl von unterschiedlichen und hochentwickelten Datenverarbeitungsgeräten der Automatisierungstechnik, wie beispielsweise programmierbare Steuerungen (PLCs), Antriebe (Drives), Sensoren oder Aktoren mittels eines mobilen Gerätes zu konfigurieren, zu warten und/oder eine Diagnose durchzuführen. Zur Durchführung dieser Aktionen werden dem Benutzer Software-Tools in Form von gerätespezifischen mobilen Applikationen bereitgestellt. Diese kann der Benutzter aus einem App-Store auf sein Mobilgerät laden, um anschließend eine Kommunikationsverbindung mit dem Datenverarbeitungsgerät zur Ausführung der Aktionen herzustellen.

Dieses Verfahren ist jedoch insofern problematisch, da der Benutzter zwar eine für das Datenverarbeitungsgerät bestimmte gerätespezifische mobile Applikation aus dem App-Store laden kann, jedoch nicht sichergestellt ist, dass die geladene Version tatsächlich mit der aktuellen Firmware des zu bearbeitenden Datenverarbeitungsgerätes übereinstimmt. Im schlimmsten Fall kann der Benutzer die auf sein mobiles Gerät geladene mobile Applikation mit dem Datenverarbeitungsgerät ohne Update der Firmware oder Downgrade der mobilen Applikation nicht nutzen.

Unabhängig davon existieren eine Vielzahl von unterschiedlichen mobilen Applikationen um die verschiedenen Datenverarbeitungsgeräte, wie speicherprogrammierbare Steuerung oder Antriebe, bedienen zu können. Der Benutzer muss eine kompatible mobile Applikation auf seinem mobilen Gerät installieren, um mit dem Datenverarbeitungsgerät eine Kommunikation aufbauen zu können. Dies kann den Benutzer verunsichern, da er wissen muss, welche mobile Applikationen er für welches Datenverarbeitungsgerät benötigt. Ferner wird für jede Applikation ein Icon auf der Benutzeroberfläche des mobilen Gerätes angezeigt, was unübersichtlich werden kann.

Um eine mobile Applikation aus einem App-Store zu laden ist es ferner erforderlich, dass der Benutzer für ein spezifisches Betriebssystem registriert ist. Ferner wird eine Internetverbindung benötigt.

Davon ausgehend liegt der vorliegenden Erfindung die Aufgabe zugrunde, ein Verfahren der eingangs genannten Art derart weiterzubilden, dass die Bereitstellung einer aktuellen gerätespezifischen mobilen Applikation zur Konfiguration, Wartung und Diagnose eines Datenverarbeitungsgerätes vereinfacht wird.

Die Aufgabe wird erfindungsgemäß durch ein Verfahren mit den Merkmalen des Anspruchs 1 gelöst.

Gemäß der Erfindung ist vorgesehen, dass die mobile Applikation in dem Datenverarbeitungsgerät gehostet und von dem Benutzer direkt aus dem Datenverarbeitungsgerät geladen werden kann. Die Verbindung zu einem App-Store, Registrierungen und eine aktive Internetverbindung sind folglich nicht notwendig. Sobald ein Benutzer eine Kommunikationsverbindung mit dem die Applikation hostenden Datenverarbeitungsgerät herstellen kann, ist dieser in der Lage, die in dem Datenverarbeitungsgerät gehostete mobile Applikation zu laden.

Dabei ist vorgesehen, dass Inhalte und/oder Funktionen der mobilen Applikation beschreibende Applikationsdaten mittels einer in dem Datenverarbeitungsgerät implementierten Generierungslogik auf der Basis von aktuellen

Daten einer Konfiguration und/oder einer Laufzeitumgebung des hostenden Datenverarbeitungsgerätes dynamisch generiert oder upgedatet werden.

Folglich ist das hostende Datenverarbeitungsgerät ausgebildet, um den Inhalt bzw. Funktionen der gehosteten mobilen Applikation upzudaten bzw. zu ändern und zwar basierend auf aktuellen Daten der Konfiguration und der Laufzeitumgebung des hostenden Datenverarbeitungsgerätes.

Die Generierungslogik ist ausgebildet, um Daten einer Konfiguration und/oder einer Laufzeitumgebung von mit dem hostenden Datenverarbeitungsgerät über ein Netzwerk gekoppelten weiteren Datenverarbeitungsgeräten zu erfassen und auf der Basis der Daten des hostenden Datenverarbeitungsgerätes und der erfassten Daten der weiteren Datenverarbeitungsgeräte die mobile Applikation zu generieren oder upzudaten.

Durch diese Verfahrensweise wird eine mobile Applikation auf dem mobilen Gerät bereitgestellt, die mit einer Vielzahl von mit dem hostenden Datenverarbeitungsgerät über ein Netzwerk verbundenen Datenverarbeitungsgeräten interagieren kann. Die mobile Applikation wird mit Daten angereichert, die dynamisch von den weiteren Datenverarbeitungsgeräten erfasst werden. Folglich wird die mobile Applikation mit aktuellen Informationen/Daten der verschiedenen Datenverarbeitungsgeräte und zwar zur Zeit der Installation bzw. zum Zeitpunkt der Bereitstellung dynamisch upgedatet.

Sowohl das hostende Datenverarbeitungsgerät als auch die weiteren, mit dem hostenden Datenverarbeitungsgerät über das Netzwerk verbundenen Datenverarbeitungsgeräte sind eine Datenquelle für die auf dem mobilen Gerät installierte mobile Applikation.

Die mobile Applikation wird in Form einer Progressiven Web Applikation (PWA) bereitgestellt.

Die Bereitstellung der Progressiven Web Applikation (PWA) umfasst folgende Verfahrensschritte:
- Verbinden des mobilen Gerätes mit dem die Progressive Web Applikation (PWA) hostenden Datenverarbeitungsgerät,
- Generieren der Applikationsdaten der Progressiven Web Applikation (PWA) durch die Generierungslogik des hostenden Datenverarbeitungsgerätes basierend auf aktuellen Daten des hostenden Datenverarbeitungsgerätes und/oder der Daten, die von den verbundenen weiteren Datenverarbeitungsgeräten bereitgestellt werden,
- Senden der generierten Progressiven Web Applikation (PWA) an das mobile Gerät,
- Registrieren der Progressiven Web Applikation (PWA) durch das mobile Gerät und
- Installieren der Progressiven Web Applikation (PWA) auf dem mobilen Gerät.

Dabei ist vorgesehen, dass die Generierung der Applikationsdaten der Progressiven Web Applikation (PWA) bei einer erstmaligen Kopplung zwischen dem mobilen Gerät und dem hostenden Datenverarbeitungsgerät angestoßen wird und dass bei jeder weiteren Verbindung das Update der Applikationsdaten der Progressiven Web Applikation (PWA) angestoßen und nur ein Datenupdate an das mobile Gerät gesendet wird.

Vorzugsweise umfasst die Generierung der Progressiven Web Applikation (PWA) folgende Verfahrensschritte:
- Generieren eines Ladeverzeichnisses (Manifest) zur Einbindung statischer Attribute, wie Name, Icons und/oder Startup-URL, für die Progressive Web Applikation (PWA),
- Integrieren von Daten eines Benutzerinterfaces (User Interface) und einer Betriebslogik (Business Logic) des hostenden Datenverarbeitungsgerätes und/oder der weiteren Datenverarbeitungsgeräte als Applikationsdaten in die Progressive Web Applikation (PWA),
- Generieren eines ServiceWorkers der Progressiven Web Applikation (PWA) und Einrichtung von ServiceWorker-Events zur Interaktion mit der Laufzeitumgebung des hostenden Datenverarbeitungsgerätes.

Dabei ist vorgesehen, dass während der Generierung der Progressiven Web Applikation (PWA) mittels der Generierungslogik ein eindeutiger Identifikator ID unter Verwendung einer MAC-Adresse eines WebServers des hostenden Datenverarbeitungsgerätes generiert und in die Progressiven Web Applikation (PWA) implementiert wird.

Gemäß einer weiteren bevorzugten Verfahrensweise ist vorgesehen, dass bei einer ersten Verbindung zwischen dem mobilen Gerät und einem die Progressiven Web Applikation (PWA) hostenden Datenverarbeitungsgerät eine index.html angefragt wird, mittels der ein ServiceWorker registriert wird und dass der ServiceWorker in das mobile Gerät geladen und auf dem mobilen Gerät installiert und aktiviert wird.

Folglich wird die ursprüngliche "Client-Server"-Beziehung eines an sich bekannten ServiceWorkers erweitert. Diese Erweiterung beinhaltet unter anderem die ID sowie die Möglichkeit, andere Progressive Web Applikationen abzufragen und in die eigene Progressive Web Applikation zu integrieren. Diese Erweiterung ist neu gegenüber dem ursprünglichen PWA Konzept.

Das Datenverarbeitungsgerät, wie z. B. ein IIOT-Gerät, kann die mobile Anwendung aktualisieren, um die neuesten Datenänderungen in dem Datenverarbeitungsgerät oder in dessen Umgebung zu berücksichtigen. Das Datenverarbeitungsgerät fungiert als Datenquelle für die installierte mobile Anwendung. Infolgedessen wird die mobile Anwendung zum Zeitpunkt der Installation / Bereitstellung auf den neuesten Stand gebracht.

Wenn ein Benutzer zum ersten Ma1 eine Verbindung zu einem Datenverarbeitungsgerät, wie IIOT-Gerät, herstellt, wird die Erzeugung einer Progressiven Web Applikation mit den neuesten Daten ausgelöst, die auf dem Datenverarbeitungsgerät verfügbar sind, mit dem der Benutzer mit seinem mobilen Gerät verbunden ist. Folglich stammen Inhalt / Daten der Progressiven Web Applikation nur von einem Gerät.

Wenn das Datenverarbeitungsgerät eine Verbindung zu anderen Datenverarbeitungsgeräten in derselben Umgebung hat, können während der Generierungsphase Diagnose- / Wartungsdaten von diesen Geräten erfasst werden. Dies führt zu einer aktualisierten Anwendung, die aus allen verfügbaren Daten aller verbundenen Datenverarbeitungsgeräte in der Umgebung besteht. Der Inhalt der Progressiven Web Applikation stammt von mehreren Datenverarbeitungsgeräten.

Die installierte Applikation ist ein Grundgerüst, das mit mehreren Datenverarbeitungsgeräten, wie IIOT-Geräten, in der Umgebung interagieren und sich selbst dynamisch mit Daten verbessern kann, die von anderen Datenverarbeitungsgeräten, wie IIOT-Geräten, erfasst wurden. Infolgedessen wird zur Installations- / Bereitstellungszeit ein Update mit den aktuellen Informationen von verschiedenen Datenverarbeitungsgeräten, wie IIOT-Geräten, durchgeführt.

Durch die multiplen Endpunkte sind mehrere Update-Events möglich. Bei verfügbaren Updates wird ein Update-Event gestartet, wobei der ServiceWorker die Updates in das mobile Gerät lädt und in diesem installiert.

Die Daten können von dem Datenverarbeitungsgerät selbst oder von anderen Instanzen, wie z. B. einem globalen Registrierungsdienst, erfasst werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Figuren zu entnehmenden bevorzugten Ausführungsbeispielen.

Es zeigen:
- Fig. 1: eine schematische Darstellung eines Datenverarbeitungsgerätes zur Bereitstellung einer mobilen Applikation für ein mobiles Gerät,
- Fig. 2: eine Kommunikationssequenz zwischen dem mobilen Gerät und dem Datenverarbeitungsgerät gem. Fig. 1,
- Fig. 3: eine Vielzahl von in einem Netzwerk angeordneten Datenverarbeitungsgeräten zur Bereitstellung einer mobilen (Master-)Applikation durch ein Master-Gerät für das mobile Gerät,
- Fig. 4: eine Kommunikationssequenz zwischen dem mobilen Gerät und dem Master-Gerät gemäß Fig. 3,
- Fig. 5: eine Kommunikationssequenz zur Identifizierung der Herkunft der mobilen Applikation,
- Fig. 6: eine schematische Darstellung des Netzwerks gem. Fig. 3 mit Datenquellen zur Generierung der gemeinsamen mobilen (Master-)Applikation,
- Fig. 7: ein schematisches Ablaufdiagramm zur Generierung einer mobilen Applikation und
- Fig. 8: eine Kommunikationssequenz zwischen dem mobilen Gerät und einem der Datenverarbeitungsgeräte zum Download und zur Aktivierung eines ServiceWorkers.

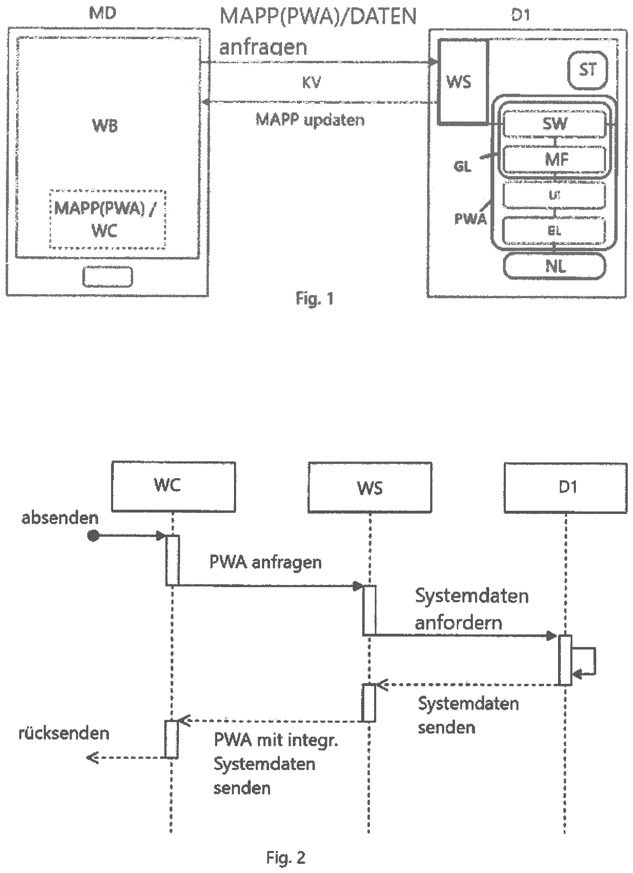

Fig. 1 zeigt rein schematisch ein mobiles Gerät MD, wie z. B. ein Smartphone, welches über eine Kommunikationsverbindung KV, wie z. B. Wifi, Bluetooth oder NFC (Near Field Communication) mit einem Datenverarbeitungsgerät D1, wie z. B. einer programmierbaren Steuerung, einem Antrieb, einem Sensor und/oder einem Aktor, verbindbar ist.

Gemäß der Erfindung ist vorgesehen, dass in dem Datenverarbeitungsgerät D1 eine mobile Applikation MAPP bereitgestellt wird, die von einem Benutzer nach Herstellung der Kommunikationsverbindung KV in das mobile Gerät MD geladen werden kann, um das Datenverarbeitungsgerät D1 z. B. zu konfigurieren, zu warten oder eine Diagnose durchzuführen. Die Kommunikationsverbindung kann als Wifi, Bluetooth oder NFC-Verbindung ausgebildet sein, so dass weder das mobile Gerät MD noch das Datenverarbeitungsgerät D1 mit dem Internet verbunden sein müssen.

Da die gerätespezifische mobile Applikation unmittelbar aus dem Datenverarbeitungsgerät D1 geladen werden kann, besteht keine Notwendigkeit, dass der Benutzer die mobile Applikation im Vorfeld aus einem App-Store laden muss oder dass eine Verbindung zu dem Internet besteht. Die von dem Datenverarbeitungsgerät D1 bereitgestellte mobile Applikation MAPP wird durch das Datenverarbeitungsgerät D1 fortlaufend aktualisiert und ist somit stets voll kompatibel, so dass verschiedene Software-Versionen zwischen der mobilen Applikation und dem zu steuernden Datenverarbeitungsgerät D1 ausgeschlossen sind. Ein weiterer Vorteil besteht darin, dass eine Registrierung bei einem App-Store nicht notwendig ist.

Das Datenverarbeitungsgerät D1 ist ausgebildet, um die mobile Applikation MAPP zu generieren und diese im laufenden Betrieb zu aktualisieren, um Änderungen von Konfigurationsdaten oder Daten einer Laufzeitumgebung des Datenverarbeitungsgerät D1 abzubilden. Folglich wirkt das Datenverarbeitungsgerät D1 als Datenquelle für die gehostete mobile Applikation, so dass die mobile Applikation MAPP zum Zeitpunkt der Installation bzw. zum Zeitpunkt der Bereitstellung stets aktuell ist.

Gemäß der Erfindung sind in dem Datenverarbeitungsgerät D1 ein Webserver WS, ein Speicher ST, eine Netzwerklogik NL sowie eine Applikation in Form einer Progressiven Web Applikation PWA mit Userinterface-Dateien UI, Steuerungslogik-Dateien BL sowie Dateien einer Generierungslogik GL mit ServiceWorker SW und Manifest MF implementiert.

Die Generierungslogik GL ist ausgebildet, aktuelle Daten der Userinterface-Dateien UI oder der Steuerungslogik-Dateien BL abzufragen, um die mobile Applikation MAPP zu generieren oder nach einer Datenänderung zu aktualisieren.

Gemäß dem dargestellten Ausführungsbeispiel basiert die Erfindung auf dem Konzept der Progressiven Web Applikation PWA. Die Verwendung von PWA's wird allerdings rein beispielhaft beschrieben, ohne den Gegenstand der Erfindung einzuschränken; denn die Generierungslogik GL kann unter Verwendung verschiedener Technologien und verschiedener Kommunikationsprotokolle implementiert werden.

Das mobile Gerät MD weist zumindest einen Webclient WC sowie einen Webbrowser WB auf, über den mittels der Kommunikationsverbindung KV der Webserver WS des Datenverarbeitungsgerätes D1 aufgerufen werden kann.

Das erfindungsgemäße Verfahren wird nachfolgend, jedoch nicht einschränkend, anhand der an sich bekannten Technologie einer Progressiven Web Applikation PWA erläutert.

Eine Progressive Web Applikation PWA ist eine Webseite, die zahlreiche Merkmale besitzt, die bislang nativen Apps vorbehalten waren. Sie kann daher auch als Symbiose aus einer responsiven Webseite und einer App beschrieben werden. Die Progressive Web Applikation PWA kann wie eine Webseite mit HTML 5, CSS 3 und JavaScript erstellt werden; zusätzlich dienen sog. ServiceWorker SW dem optimierten Caching der Offline-Funktionalitäten. Zur Kommunikation zwischen einem Webclient WC des mobilen Gerätes MD und einem Webserver WS des Datenverarbeitungsgerätes D1 kann z. B. das HTTPS-Protokoll verwendet werden.

Die Progressive Web Applikation PWA wird gestartet, indem z. B. in dem Webbrowser WB des mobilen Gerätes MD eine URL des Webservers WS eingegeben und damit eine erste Anfrage gesendet wird. Der Webserver WS nimmt die Anfrage entgegen und übergibt sie an die PWA, die als eine Webanwendung fungiert. Diese erzeugt oder lädt einen HTML-Quellcode einer Webseite, der vom Webserver zurück zum Browser geschickt wird (HTTPS-Response).

Der Benutzer sieht eine Webseite, die aufgrund des responsiven Designs an das mobile Endgerät angepasst ist. Obwohl die Progressive Web Applikation PWA über eine URL abgerufen wurde, kann der Benutzer einen Icon auf den Bildschirm des mobilen Gerätes, wie Smartphone, sehen oder Push-Benachrichtigungen erhalten und die Seite auch offline verwenden. Die auf Progressive Enhancement beruhende Technologie soll Benutzern je nach verwendeten Geräten bestmögliche User Experience bieten.

Ein ServiceWorker SW ist ein JavaScript, welches der Webbrowser WB im Hintergrund ausführt. Es stellt für Progressive Web Applikationen PWA essentielle Funktionen, wie das Caching für die Offline-Verwendbarkeit, bereit. Einmal online aufgerufen, können Inhalte beim nächsten Besuch der Seite auch ohne Internetverbindung angezeigt werden (Offline-Mode). Auch von nativen Apps bekannte Push-Benachrichtigungen sind mit ServiceWorkern SW möglich. Die ServiceWorker SW sind eigens programmiert und im JavaScript der Seite registriert und installiert. ServiceWorker SW bedienen HTTPS, weshalb jede Progressive Web App mit HTTPS läuft. Eine Verbindung über eine ungesicherte HTTP-Verbindung ist nicht möglich.

Fig. 2 zeigt eine anfängliche Kommunikationssequenz zwischen dem Webclient WC des mobilen Gerätes MD und dem Webserver WS des Datenverarbeitungsgerätes D1. In einem ersten Schritt wird der Webserver WS über eine Anfrage des Webclients WC des mobilen Gerätes MD aufgerufen. Über den Webclient WC wird eine Anfrage "PWA anfragen" an den Webserver WS abgesendet. Die Generierungslogik GL ruft aus dem Speichermodul SM aktuelle Systemdaten basierend auf der aktuellen Laufzeitumgebung und dem aktuellen Status des Datenverarbeitungsgerätes ab, die mittels der Generierungslogik GL in die Progressive Web Applikation PWA integriert werden. Die Progressive Web Applikation mit den integrierten Systemdaten wird von dem Webserver WS an den Webclient WC des mobilen Gerätes MD gesendet.

Das mobile Gerät MD registriert die Progressive Web Applikation (PWA) und der Benutzer kann die PWA auf dem mobilen Gerät installieren.

Nach der Installation stehen in dem mobilen Gerät MD alle notwendigen Dateien zur Ausführung der Progressiven Web Applikation PWA zur Verfügung, ohne dass eine Verbindung zu dem Datenverarbeitungsgerät D1 notwendig ist.

Bei einer erneuten Verbindung des mobilen Gerätes MD mit demselben Datenverarbeitungsgerät D1 werden die Daten des Datenverarbeitungsgerätes D1 automatisch aktualisiert und folglich auch die Progressive Web Applikation PWA.

Mit anderen Worten erfolgt eine dynamische Generierung der in dem Datenverarbeitungsgerät gehosteten Progressiven Web Applikation PWA.

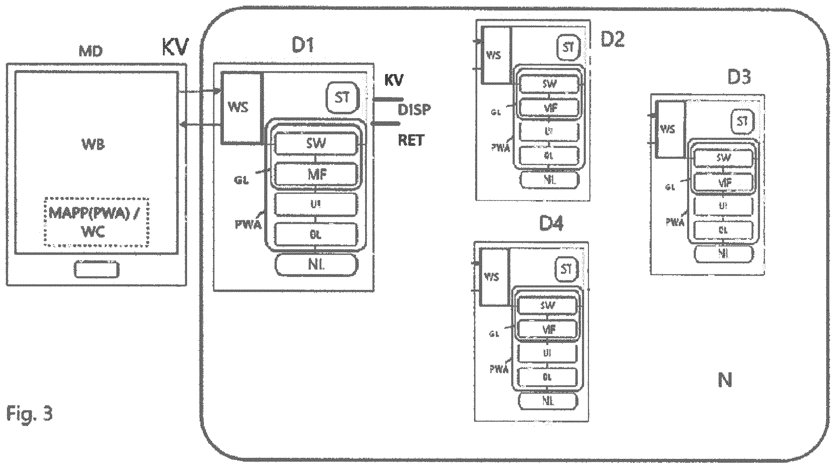

Fig. 3 zeigt in schematischer Darstellung ein Netzwerk N mit einer Vielzahl von Datenverarbeitungsgeräten D1...D4, die kommunikativ gekoppelt sind.

Gemäß einer alternativen Ausführungsform des erfindungsgemäßen Verfahrens ist vorgesehen, dass die in dem Datenverarbeitungsgerät D1 implementierte Generierungslogik GL derart ausgebildet ist, um eine Progressive Web Applikation PWA zu generieren, in der sowohl Systemdaten des hostenden Datenverarbeitungsgerätes D1 als auch Systemdaten der mit dem Datenverarbeitungsgerät D1 verbundenen weiteren Datenverarbeitungsgeräte D2...D4 integriert sind.

Das mobile Gerät MD ist über die Kommunikationsverbindung KV mit dem Datenverarbeitungsgerät D1 verbunden, das nachfolgend als Master-Gerät D1 bezeichnet wird. Sobald sich die Systemdaten bzw. die Konfigurationsdaten eines mit dem Netzwerk N verbundenen Datenverarbeitungsgerätes D1...D4 ändern, werden die Datenänderungen durch die Generierungslogik GL des Master-Gerätes D1 über eine Datenkommunikation Senden DISP/Empfangen RET erfasst, so dass die Progressive Web Applikation (PWA) automatisch aktualisiert wird. Sofern sämtliche mit dem Netzwerk N verbundenen Datenverarbeitungsgeräte D1...D4 eine erfindungsgemäße Generierungslogik GL aufweisen, ist es für einen Benutzer unerheblich, mit welchem Datenverarbeitungsgerät D1...D4 sich das mobile Gerät MD verbindet, da jedes Datenverarbeitungsgerät die Fähigkeit besitzt, andere in demselben Netzwerk verbundene Datenverarbeitungsgeräte zu detektieren und deren Daten in die Progressive Web Applikation (PWA) zu integrieren. Durch das Master-Gerät D1 wird daher zur Installations- bzw. Deployment-Zeit stets eine aktualisierte Applikation zur Verfügung gestellt.

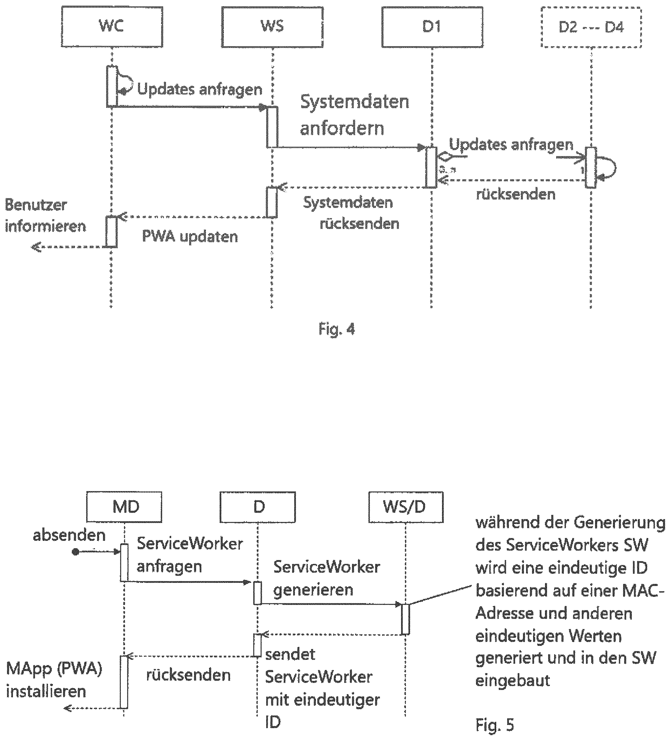

Fig. 4 zeigt eine Kommunikationssequenz zwischen dem mobilen Gerät MD und den weiteren Datenverarbeitungsgeräten D1...D4

Wenn ein Benutzer über den Webclient WC des mobilen Gerätes MD den Webserver WS des Master-Gerätes D1 aufruft, werden Updates angefragt. Der Webserver WS fragt Systemdaten des Master-Gerätes D1 ab. Über eine Netzwerklogik NL werden die Datenverarbeitungsgeräte D2...D4 nach Updates abgefragt und diese an das Master-Gerät D1 zurückgesendet.

Die aktuellen Systemdaten werden zur Generierung einer aktuellen Progressiven Web Applikation PWA in der Generierungslogik GL verarbeitet. Die aktuellen Systemdaten werden über den Webserver WS an den Webclient WC des mobilen Gerätes zum Update der in dem mobilen Gerät bereits installierten Progressiven Web Applikation PWA zurückgesendet und können angezeigt und bearbeitet werden.

Folglich wird stets eine aktualisierte mobile Applikation durch das Master-Gerät D1 bereitgestellt, welche sämtliche verfügbaren Systemdaten der im Netzwerk vorhandenen Datenverarbeitungsgeräte umfasst.

Die Progressive Web Applikation PWA enthält somit Daten von einer Vielzahl der im Netzwerk N vorhandenen Geräte. Die Daten können durch das Master-Gerät D1 selbst oder durch andere Instanzen, wie z. B. einem globalen Registerservice, erfasst werden.

Die Dateien für die Progressive Web Applikation PWA werden z. B. über das HTTPS-Protokoll an das mobile Gerät MD übertragen. Wenn alle notwendigen Dateien übermittelt wurden, ist der in dem mobilen Gerät MD implementierte Webbrowser WB im Stande zu erkennen, dass aktuell eine Progressive Web Applikation PWA angezeigt wird und bietet dem Benutzer die lokale Installation der Progressive Web Applikation PWA an.

Nach der Installation hat das mobile Gerät MD alle notwendigen Dateien um die Progressive Web Applikation auszuführen, und zwar ohne Verbindung zu einem der Datenverarbeitungsgeräte D1...D4 und/oder ohne Verbindung zu dem Internet. Sollte anschließend eine Verbindung zu einem der Datenverarbeitungsgeräte D1...D4 hergestellt werden, werden die Daten der Progressive Web Applikation PWA auf dem mobilen Gerät automatisch aktualisiert.

Fig. 5 zeigt rein schematisch eine Kommunikationssequenz zwischen dem mobilen Gerät MD und einem der Datenverarbeitungsgeräte D1...D4 zur Bestimmung der Herkunft der Daten. Während der Installation/Generierung wird ein eindeutiger Indikator ID unter Verwendung z.B. der MAC-Adresse des Webservers WS und ggfs. weiterer Parameter, wie Timestamp, Geolocation oder UniqeID SW, generiert. Der eindeutige Indikator ID kann verwendet werden, um die Herkunft der mobilen Applikation zu identifizieren und diese entsprechend zu handhaben, wie z. B. Verwendung, Warnung, Blockierung oder Neuinstallation.

Der ServiceWorker SW kontrolliert hierbei die Neuinstallation der Progressiven Web Applikation PWA bzw. das Update einiger Inhalte der Progressiven Web Applikation PWA auf Basis der heruntergeladenen Daten.

Der ServiceWorker SW ist eine sehr wichtige Komponente der Progressiven Web Applikation PWA. Der ServiceWorker SW implementiert die Logik zur Offline-Nutzung und dem Updateverhalten. Ohne einen ServiceWorker SW kann keine Installation einer Progressiven Web Applikation PWA erreicht werden. Da der ServiceWorker SW unabhängig von der eigentlich Progressiven Web Applikation PWA ausgeführt wird, ermöglicht er das Updaten im Hintergrund, das Empfangen von Push-Nachrichten und/oder das Installieren einer Progressiven Web Applikation PWA auf dem mobilen Gerät MD. Der ServiceWorker SW agiert dabei als "Proxy"-Server zwischen der eigentlichen Progressiven Web Applikation PWA und dem Datenverarbeitungsgerät wie IIoT (Industrial Internet of Things) Gerät.

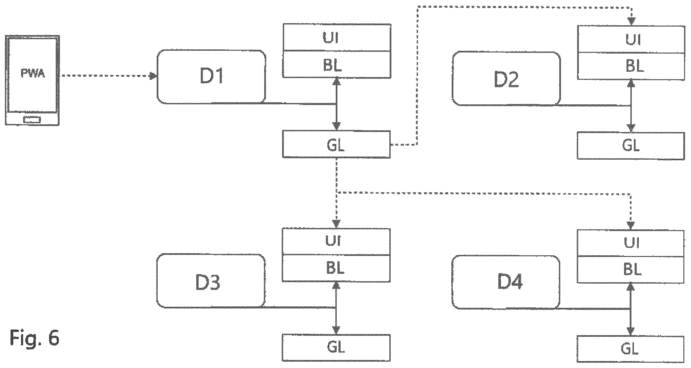

Fig. 6 zeigt rein schematisch das Netzwerk N gemäß Fig. 3 zur Generierung einer mobilen Applikation als Master-Applikation in dem Datenverarbeitungsgerät D1 mit sämtlichen Daten der angeschlossen Datenverarbeitungsgeräte D1...D4.

Jedes der Datenverarbeitungsgeräte D1...D4 hat eine Generierungslogik GL, um eine mobile Applikation in Form einer Progressive Web Applikation PWA zu generieren. Ferner hat jedes der Datenverarbeitungsgeräte D1...D4 spezifische User-Interface-Dateien UI sowie Steuerungslogik-Dateien BI als gerätespezifisches Datenset.

Wenn ein Datenverarbeitungsgerät nicht das Master-Gerät D1 ist, kann dieses die User-Interface-Dateien UI bzw. Steuerungslogik-Dateien BL von anderen Geräten erfassen, um die Daten in die generierte Progressive Web Applikation PWA aufzunehmen.

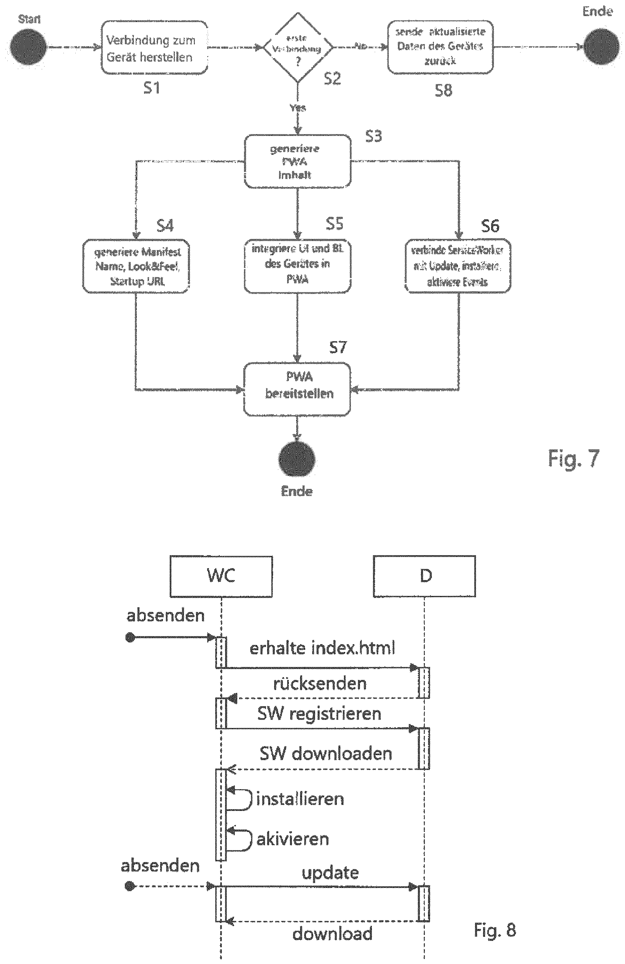

Fig. 7 zeigt einen Verfahrensablauf zur Generierung und Bereitstellung der Progressive Web Applikation PWA.

Nach dem Start erfolgt in einem ersten Schritt S1 die Verbindung des mobilen Gerätes MD mit einem der Datenverarbeitungsgeräte D1...D4 herstellen.

In einem Schritt S2 erfolgt eine Abfrage, ob die Verbindung die erste Verbindung mit dem Datenverarbeitungsgerät ist. Bejahendenfalls wird in einem Schritt S3 die Generierung der Progressive Web Applikation PWA ausgeführt.

In einem Schritt S4 wird ein Ladeverzeichnis generiert, welches statische Attribute wie den Namen, die Icons und die Start-URL der Progressive-Web-Applikation enthält. Das Ladeverzeichnis wird nur einmal generiert und in eine Datei "index.html" der Progressiven Web Applikation PWA integriert.

In einem Schritt S5 werden die User-Interface-Dateien UI und die Steuerungslogik-Dateien BL in die Progressive Web Applikation PWA integriert.

In einem Schritt S6 wird der ServiceWorker generiert und die ServiceWorker-Events werden eingerichtet, um mit der Laufzeitumgebung des Datenverarbeitungsgerätes zusammenarbeiten zu können.

In einem Schritt S7 wird die generierte Progressive Web Applikation PWA bereitgestellt.

Sollte es sich bei der Verbindung des mobilen Gerätes MD mit einem der Datenverarbeitungsgeräte D1...D4 nicht um die erstmalige Verbindung handeln, wird lediglich ein Daten-Update durchgeführt und die aktualisierte Progressive Web Applikation PWA wird im Schritt S8 zu dem mobilen Geräte MD zurückgesendet.

Fig. 8 zeigt eine Kommunikationssequenz zwischen dem Webclient WC des mobilen Gerätes MD und dem Datenverarbeitungsgerät D1. Durch Absenden einer Anfrage wird bei der ersten Verbindung die "index.html" der Progressiven Web Applikation PWA angefragt. Die "index.html" wird an den Webclient WC zurückgesendet und anschließend wird der ServiceWorker durch das Datenverarbeitungsgerät D1 registriert. In einem weiteren Schritt wird der ServiceWorker in das mobile Gerät MD geladen und auf dem mobilen Gerät MD installiert. Nach der Installation wird dieser aktiviert.

Sollten Updates verfügbar sein, wird ein "Update-Event" gestartet und mittels des ServiceWorkers werden die Updates geladen und installiert.

Durch das erfindungsgemäße Verfahren werden folgende Vorteile erreicht:
- Anstelle einer Vielzahl von mobilen Applikationen auf dem mobilen Gerät wird nur eine einzige mobile Applikation generiert.
- Wenn ein Datenverarbeitungsgerät den Inhalt der gehosteten Progressive Web Applikation ändert, dann wird die in dem mobilen Gerät installierte mobile (Master)Applikation automatisch aktualisiert.
- Es gibt keine Kontrolle über die mobilen Applikationen durch Fremdanbieter von App-Stores.
- Sollte eines der Datenverarbeitungsgeräte defekt sein, kann die mobile (Master)Applikation durch ein anderes Gerät generiert oder bereitgestellt (maintained) werden.
- Die mobile (Master)Applikation erfüllt immer die Applikations-Gültigkeitsregeln.
- Die mobile (Master)Applikation kann auf verschiedenen Plattformen, wie iOS, Linux, Windows oder Android, laufen.
- Das beschriebene System kann auf Consumer-Geräte, wie z.B. Fernseher, Kühlschränke, Fotokameras, erweitert werden.

## Patentansprüche

1. Verfahren zur Generierung und Bereitstellung einer mobilen Applikation zum Laden in ein mobiles Gerät, wobei die auf dem mobilen Gerät ausführbare mobile Applikation zur Konfiguration, Wartung und/oder Diagnose von Daten und/oder Funktionen eines mit dem mobilen Gerät über eine Kommunikationsverbindung (KV) koppelbaren Datenverarbeitungsgerätes (D1..D4) wie programmierbare Steuerung, Antrieb, Aktor oder Sensor ausgebildet ist, wobei die mobile Applikation in dem Datenverarbeitungsgerät gehostet und nach Herstellung der Kommunikationsverbindung aus dem Datenverarbeitungsgerät in das mobile Gerät geladen wird, wobei Inhalte und/oder Funktionen der die mobile Applikation beschreibenden Applikationsdaten mittels einer in dem Datenverarbeitungsgerät implementierten Generierungslogik (GL) auf der Basis von aktuellen Daten einer Konfiguration und/oder einer Laufzeitumgebung des hostenden Datenverarbeitungsgerätes dynamisch generiert oder upgedatet werden und wobei die Generierungslogik ausgebildet ist, Daten einer Konfiguration und/oder Laufzeitumgebung von mit dem hostenden Datenverarbeitungsgerät über ein Netzwerk (N) gekoppelten weiteren Datenverarbeitungsgeräten zu erfassen,
**dadurch gekennzeichnet,**
**dass** in jedem der Datenverarbeitungsgeräte eine Generierungslogik implementiert ist, die ausgebildet ist, um eine die mobile Applikation bereitstellende Progressive Web Applikation (PWA) zu generieren, dass das über die Kommunikationsverbindung mit dem mobilen Gerät verbundene hostende Datenverarbeitungsgerät die Funktion eines Master-Gerätes übernimmt, dass mittels der Generierungslogik des Master-Gerätes Änderungen der System- und/oder Konfigurationsdaten der über das Netzwerk verbundenen Datenverarbeitungsgeräte über eine Datenkommunikation erfasst werden, so dass die Progressive Web Applikation des Master-Gerätes automatisch aktualisiert wird und auf der Basis der Daten des Master-Gerätes und der erfassten Daten der weiteren Datenverarbeitungsgeräte die mobile Applikation generiert und upgedatet wird.

2. Verfahren nach Anspruch 1,
**dadurch gekennzeichnet,**
**dass** die Bereitstellung der Progressiven Web Applikation (PWA) folgende Verfahrensschritte umfasst:
- Verbinden des mobilen Gerätes mit dem die Progressive Web Applikation (PWA) hostenden Datenverarbeitungsgerät als Master-Gerät,
- Generieren der Applikationsdaten der Progressiven Web Applikation (PWA) durch die Generierungslogik des Master-Gerätes basierend auf aktuellen Daten des Master-Gerätes und der erfassten Daten von verbundenen weiteren Datenverarbeitungsgeräten,
- Senden der generierten Applikationsdaten oder der generierten Progressiven Web Applikation (PWA) an das mobile Gerät,
- Registrieren der Progressiven Web Applikation (PWA) durch das mobile Gerät
und
- Installieren der Progressiven Web Applikation (PWA) auf dem mobilen Gerät.

3. Verfahren nach Anspruch 1,
**dadurch gekennzeichnet,**
**dass** die Generierung der Applikationsdaten der Progressiven Web Applikation (PWA) bei einer erstmaligen Kopplung zwischen dem mobilen Gerät und einem der Datenverarbeitungsgeräte getriggert wird und dass bei jeder weiteren Verbindung das Update der Applikationsdaten der Progressiven Web Applikation (PWA) getriggert wird.

4. Verfahren nach Anspruch 1,
**dadurch gekennzeichnet,**
**dass** die Generierung der Progressiven Web Applikation (PWA) folgende Verfahrensschritte umfasst:
- Generierung eines Ladeverzeichnisses (Manifest) zur Einbindung statischer Attribute wie Name, Icons und/oder Startup-URL für die Progressiven Web Applikation (PWA);
- Integration von Daten eines Benutzerinterfaces (User Interface) und einer Betriebslogik (Business Logic) des Master-Gerätes und der weiteren Datenverarbeitungsgeräte als Applikationsdaten in die Progressiven Web Applikation (PWA);
- Generierung eines ServiceWorkers der Progressiven Web Applikation (PWA) und Einrichtung von ServiceWorker-Events zur Interaktion mit der Laufzeitumgebung des Master-Gerätes.

5. Verfahren nach zumindest einem der vorhergehenden Ansprüche,
**dadurch gekennzeichnet,**
**dass** während der Generierung der Progressiven Web Applikation (PWA) mittels der Generierungslogik ein eindeutiger Identifikator unter Verwendung einer MAC-Adresse und ggfs. weiterer Merkmale wie Timestamp, Geolocation oder eine eindeutige Identifikation eines WebServers des hostenden Datenverarbeitungsgerätes generiert und in die Progressive Web Applikation (PWA) implementiert wird.

6. Verfahren nach zumindest einem der vorhergehenden Ansprüche,
**dadurch gekennzeichnet,**
**dass** bei einer ersten Verbindung zwischen dem mobilen Gerät und einem die Progressive Web Applikation (PWA) hostenden Datenverarbeitungsgerät eine index.html angefragt wird, mittels der ein ServiceWorker registriert wird und dass der ServiceWorker in das mobile Gerät geladen und auf dem mobilen Gerät installiert und aktiviert wird.

7. Verfahren nach Anspruch 6,
**dadurch gekennzeichnet,**
**dass** bei verfügbaren Updates ein Update-Event gestartet wird und dass der ServiceWorker die Updates in das mobile Gerät lädt und in diesem installiert.

8. Verfahren nach Anspruch 1,
**dadurch gekennzeichnet,**
**dass** die installierte Applikation mit mehreren Datenverarbeitungsgeräten in der Netzwerkumgebung interagiert und sich selbst dynamisch durch Daten aktualisiert, die von anderen verbundenen Datenverarbeitungsgeräten erfasst werden.

9. Verfahren nach zumindest einem der vorhergehenden Ansprüche,
**dadurch gekennzeichnet,**
**dass** die Daten in Form von Diagnose- / Wartungsdaten während einer Generierungsphase von diesen Geräten erfasst werden.

## Claims

1. A method for the generation and provision of a mobile application to be loaded in a mobile device, wherein the mobile application executable on the mobile device is designed for the configuration, maintenance, and/or diagnosis of data and/or functions of a data processing device (D1 ... D4), such as a programmable logic controller, drive, actor or sensor, which can be coupled to the mobile device via a communication link (KV), wherein the mobile application is hosted in the data processing device and is loaded from the data processing device into the mobile device after the communication link is established, wherein content and/or functions of the application data describing the mobile application are dynamically generated or updated by means of a generation logic (GL) implemented in the data processing device on the basis of current data of a configuration and/or a runtime environment of the hosting data processing device, and wherein the generation logic is designed to record data of a configuration and/or runtime environment of further data processing devices coupled to the hosting data processing device via a network,
**characterized in,**
**that** a generation logic is implemented in each of the data processing devices, which is designed to generate a progressive web application (PWA) providing the mobile application, that the hosting data processing device connected to the mobile device via the communication link takes over the function of a master device, that changes of the system and/or configuration data of the data processing devices connected via the network are recorded via a data communication by means of the generation logic of the master device, so that the progressive web application of the master device is automatically updated, and wherein the mobile application is generated and updated on the basis of the data of the master device and the recorded data of the connected further data processing devices.

2. Method according to claim 1,
**characterized in,**
**that** the provision of the progressive web application (PWA) comprises the following method steps:
- connecting the mobile device to the data processing device as a master device hosting the progressive web application (PWA),
- generating the application data of the progressive web application (PWA) by way of the generation logic of the master device based on current data of the master device and the recorded data of the connected further data processing devices,
- sending the generated application data or the generated progressive web application (PWA) to the mobile device,
- registering the progressive web application (PWA) by way of the mobile device, and
- installing the progressive web application (PWA) on the mobile device.

3. Method according to claim 1,
**characterized in,**
**that** the generation of the application data of the progressive web application (PWA) is triggered upon a first coupling between the mobile device and one of the data processing devices, and that the update of the application data of the progressive web application (PWA) is triggered upon each further connection.

4. Method according to claim 1,
**characterized in,**
**that** the generation of the progressive web application (PWA) comprises the following method steps:
- generation of a manifest to incorporate static attributes, such as name, icons and/or startup-URL for the progressive web application (PWA);
- integration of data of a user interface and a business logic of the master device and the further data processing devices as application data in the progressive web application (PWA); and
- generation of a ServiceWorker of the progressive web application (PWA) and configuring ServiceWorker events for interaction with the runtime environment of the master device.

5. Method according to at least one of the preceding claims,
**characterized in,**
**that** during the generation of the progressive web application (PWA) by means of the generation logic, a unique identifier is generated using a Media Access Control MAC - address and if necessary using further features such as a timestamp, a geolocation, and a unique identification of a web server of the hosting master device and implemented in the progressive web application (PWA).

6. Method according to at least one of the preceding claims,
**characterized in,**
**that**, upon a first connection between the mobile device and the data processing device hosting the progressive web application (PWA), an index.html is requested, by means of which, a ServiceWorker is registered, and that the ServiceWorker is loaded in the mobile device and installed and activated on the mobile device.

7. Method according to claim 6,
**characterized in,**
**that**, in the event of available updates, an update event is started, and that the ServiceWorker loads the updates into the mobile device and installs them therein.

8. Method according to claim 1,
**characterized in,**
**that** the installed application interacts with multiple data processing devices in the network environment and dynamically updates itself by way of data which are recorded from other connected data processing devices.

9. Method according to at least one of the preceding claims,
**characterized in,**
**that** the data are recorded in the form of diagnostic/maintenance data during a generation phase from the connected data processing devices.

## Revendications

1. Procédé de génération et de fourniture d'une application mobile à charger dans un appareil mobile, sachant que l'application mobile exécutable sur l'appareil mobile est conçue pour la configuration, la maintenance et/ou le diagnostic de données et/ou de fonctions d'un appareil de traitement de données (D1...D4), tel qu'une commande programmable, un entraînement, un actionneur ou un capteur, pouvant être couplé à l'appareil mobile par une liaison de communication (KV), sachant que l'application mobile est hébergée dans l'appareil de traitement de données et, après établissement de la liaison de communication, est chargée à partir de l'appareil de traitement de données dans l'appareil mobile, sachant que des contenus et/ou des fonctions des données d'application décrivant l'application mobile sont générées ou mises à jour dynamiquement au moyen d'une logique de génération (GL) implémentée dans l'appareil de traitement de données sur la base des données actuelles d'une configuration et/ou d'un environnement d'exécution de l'appareil de traitement de données d'hébergement et sachant que la logique de génération est conçue pour collecter les données d'une configuration et/ou d'un environnement d'exécution d'autres appareils de traitement de données couplés à l'appareil de traitement de données d'hébergement via un réseau (N),
**caractérisé en ce**
**qu'**une logique de génération est implémentée dans chacun des appareils de traitement de données et est développée pour générer une application web progressive (PWA) fournissant l'application mobile, que l'appareil de traitement de données d'hébergement relié à l'appareil mobile via la liaison de communication assume la fonction d'un appareil maître, qu'au moyen de la logique de génération de l'appareil maître, des modifications des données de système et/ou de configuration des appareils de traitement de données reliés par le réseau sont collectées via une communication de données, de sorte que l'application web progressive de l'appareil maître est automatiquement actualisée et que l'application mobile est générée et mise à jour sur la base des données de l'appareil maître et des données collectées des autres appareils de traitement de données.

2. Procédé selon la revendication 1,
**caractérisé en ce**
**que** la fourniture de l'application web progressive (PWA) comprend les étapes suivantes :
- Connexion de l'appareil mobile à l'appareil de traitement de données hébergeant l'application web progressive (PWA) en tant qu'appareil maître,
- Génération des données d'application de l'application web progressive (PWA) via la logique de génération de l'appareil maître sur la base des données actuelles de l'appareil maître et des données collectées par d'autres appareils de traitement des données connectés,
- Envoi des données d'application générées ou de l'application web progressive (PWA) générée à l'appareil mobile,
- Enregistrement de l'application web progressive (PWA) par l'appareil mobile et
- Installation de l'application web progressive (PWA) sur l'appareil mobile.

3. Procédé selon la revendication 1,
**caractérisé en ce**
**que** la génération des données d'application de l'application web progressive (PWA) est déclenchée lors d'un premier couplage entre l'appareil mobile et l'un des appareils de traitement de données et en ce que la mise à jour des données d'application de l'application web progressive (PWA) est déclenchée lors de chaque connexion ultérieure.

4. Procédé selon la revendication 1,
**caractérisé en ce**
**que** la génération de l'application web progressive (PWA) comprend les étapes suivantes :
- Génération d'un répertoire de chargement (manifeste) pour l'intégration d'attributs statiques tels que le nom, les icônes et/ou l'URL de démarrage pour l'application web progressive (PWA) ;
- Intégration de données d'une interface utilisateur (User Interface) et d'une logique d'exploitation (Business Logic) de l'appareil maître et des autres appareils de traitement des données en tant que données d'application dans l'application web progressive (PWA) ;
- Génération d'un service worker de l'application web progressive (PWA) et mise en place d'événements service worker pour interagir avec l'environnement d'exécution de l'appareil maître.

5. Procédé selon au moins l'une des revendications précédentes,
**caractérisé en ce**
**que**, pendant la génération de l'application web progressive (PWA), un identifiant unique est généré au moyen de la logique de génération en utilisant une adresse MAC et, si nécessaire, d'autres caractéristiques telles que l'horodatage, la géolocalisation ou une identification unique d'un serveur web de l'appareil de traitement de données hébergeur, et est implémenté dans l'application web progressive (PWA).

6. Procédé selon au moins l'une des revendications précédentes,
**caractérisé en ce**
**que**, lors d'une première connexion entre l'appareil mobile et un appareil de traitement de données hébergeant l'application web progressive (PWA), un index.html est demandé, au moyen duquel un service worker est enregistré et en ce que le service worker est chargé dans l'appareil mobile et installé et activé sur l'appareil mobile.

7. Procédé selon la revendication 6,
**caractérisé en ce**
**que**, lorsque des mises à jour sont disponibles, un événement de mise à jour est lancé et que le service worker charge les mises à jour dans l'appareil mobile et les installe dans ce dernier.

8. Procédé selon la revendication 1,
**caractérisé en ce**
**que** l'application installée interagit avec plusieurs appareils de traitement de données dans l'environnement réseau et se met elle-même à jour dynamiquement par le biais de données collectées auprès d'autres appareils de traitement de données connectés.

9. Procédé selon au moins l'une des revendications précédentes,
**caractérisé en ce**
**que** les données sont collectées par ces appareils sous forme de données de diagnostic / de maintenance au cours d'une phase de génération.
